# EUROPÄISCHE PATENTSCHRIFT

(11) **EP 3 201 136 B1**
(45) Veröffentlichungstag und Bekanntmachung des Hinweises auf die Patenterteilung: **13.04.2022**
(21) Anmeldenummer: 15787891.9
(22) Anmeldetag: 30.09.2015
(51) Int. Cl.: C02F 1/00, C02F 1/32

(54) **VORRICHTUNG ZUM FILTRIEREN VON WASSER**
DEVICE FOR WATER FILTRATION
APPAREIL POUR LA FILTRATION DE L'EAU

(30) Priorität: 01.10.2014 AT 506992014
(43) Veröffentlichungstag der Anmeldung: 09.08.2017
(73) Patentinhaber: Deltacore GmbH, 4600 Wels (AT)
(72) Erfinder: EL KHIAR, Hakim, 6000 Koper (SI); BRANDT, Vili, 1000 Ljubljana (SI); GLAVINA, Martin, 6000 Koper (SI)
(74) Vertreter: Hübscher & Partner Patentanwälte GmbH
(86) Internationale Anmeldenummer: PCT/AT2015/050244
(87) Internationale Veröffentlichungsnummer: WO 2016/049674

(56) Entgegenhaltungen:
- WO-A1-01/49612
- WO-A1-87/06841
- WO-A1-2006/134567
- KR-B1- 100 626 193
- US-A- 5 026 477
- US-B1- 7 473 362

## Beschreibung

### Technisches Gebiet

Die Erfindung bezieht sich auf eine Vorrichtung zum Filtrieren von Wasser mit einem Filterpaket aus verschiedenen Filteranordnungen und mit UV-Strahlern zur UV-Sterilisierung des Wassers, für die Aufbereitung von hochwertigem Wasser, nämlich einen Multi-Medien-Wasserfilter, wobei das kontaminierte Wasser durch eine Eintrittsöffnung in eine erste Kammer einbringbar ist, wobei in Strömungsrichtung des Wassers gesehen hinter einer perforierten Platte der ersten Kammer das Filterpaket aus verschiedenen Filteranordnungen in einem Gehäuse vorgesehen ist und dass in Strömungsrichtung des Wassers gesehen hinter dem Filterpaket gesehen eine zweite Kammer vorgesehen ist, der eine Auslassöffnung für gereinigtes Wasser zugeordnet ist und wobei wenigstens eine UV- Lichtquelle vorgesehen ist.

### Stand der Technik

Eine Vorrichtung zum Filtrieren von Wasser der eingangs geschilderten Art ist aus der US 5 026 477 A bekannt. Weitere gattungsgemäße Vorrichtungen offenbaren die WO 87/06841 A1, die US 7 473 362 B1 und die WO 01 /49612 A1. Multi-Medien-Wasserfilter (MMF) sind die Filter, die mit mehreren Filtrationsmedien in einem Gehäuse wirken. Ein MMF ermöglicht eine hohe Qualität des filtrierten Wassers bei einer kürzeren Kontaktzeit und bei größeren Durchflüssen im Vergleich zu herkömmlichen Sandfiltern. Ein klassischer MMF besteht normalerweise aus drei Schichten von Filtermedien. Die obersten Schichten des Mediums weisen größere Aktivkohlepartikeln auf, der zentrale Teil besteht aus kleineren Aluminiumsilikatpartikeln und im unteren Teil sind Partikeln aus rotem Silikat mit einer Größe von 0,3 mm. Eine solche Konfiguration ist wegen der besseren Rückreinigung des Filters notwendig. Die Nachteile sind, dass der Filter nicht bakteriostatisch ist und die Aktivkohle einen idealen Nährboden für Bakterien darstellt.

Zu einer UV-Sterilisierung von Wassers kann ein Filter im Filtergehäuse zum Schutz gegen das Wachstum von Mikroorganismen mit UV-Strahlern ausgestattet sein. LED-UV benötigen nur sehr wenig Energie und sind somit für den Betrieb mit Solarzellen perfekt bei mobilen Anwendung geeignet, insbesondere wenn die Energiegewinnung problematisch ist und trotzdem eine hohe Wasserqualität gefordert wird. Die UV-Halbleiter-LEDs repräsentieren die neueste Generation von umweltfreundlichen, leicht zu montierenden, kompakten und robusten UV-Lichtquellen. Die Erforscher haben die LED-UV-Lichtdioden auf hermetisch geschlossenen Elektroplattformen entwickelt. Im Gegensatz zu klassischem UV enthalten die LED-UV kein Quecksilber und werden unmittelbar aus den elektrischen Niederspannungsstromquellen, wie z. B. Batterien und Sonnenzellen, eingespeist. Die LED-UV benötigt keinen Ballast, da es beim Ein- und Ausschalten nicht zur Degradierung der Strahlungsintensität kommt. Deswegen kann er nach Bedarf ein- und ausgeschaltet werden.

Es gibt einige bekannte Lösungen von Multi-Medien-Mehrstufen-Wasserfiltern. Die älteste bekannte Lösung für einen Multi-Medien-Mehrstufen-Wasserfilter, die dem Filter aus dem beiliegenden Patentanspruch hinsichtlich der REDOX-Filtrationsmitteln ähnlich ist, ist aus der US 5,552,046 bekannt. Gemäß diesem Dokument besteht der mikrobiologische Multi-Medien-Mehrstufen- Wasserfilter aus zwei Stufen und mehreren Filterscheiben im Inneren dieser Stufen und mehreren Filterscheiben im Inneren dieser Stufen, so dass die erste Stufe aus Aktivkohlegranulat besteht, das in mehreren Filterscheiben angeordnet ist, wobei jeweilige Scheibe aus mehreren Filtrationsmedien mit Porengrößen von 0,2 Mikron oder weniger besteht, deshalb werden auf der ersten Stufe 99 Prozent der Partikeln, die 0,5 Mikron übersteigen, entfernt, und auf der zweiten Stufe werden 99,9 Prozent aller bakteriellen und zystischen Mikroorganismen entfernt. Der Filter ist in einem einheitlichen Gehäuse ausgelegt und die erste Filterstufe besteht aus granulierter, mit Silberionen gemischter Aktivkohle, wobei die genannte Mischung zwischen zwei Filtrationsscheiben eingelegt ist. Die Filtrationsscheiben bestehen aus mehreren Schichten verschiedener Filtrationsmedien, z. B. aus porösen halbdurchlässigen Kunststoffschichten und aus Filzschichten. Der genannte Filter beinhaltet in dem einheitlichen Gehäuse keinen UV-Sterilisationsprozess, ermöglicht jedoch eine mikrobiologische Reinigung. Im Vergleich zu dem hier beschriebenen Multi-Medien-Mehrstufen-Wasserfilter ist die genannte Lösung vor allem vom Gesichtspunkt der Lebensdauer des Filters her ungünstig, da trotzt einer Kombination von Hochdruck- und Niederdruckkammern im Inneren der Mehrstufenfiltration, die zwar die Anwendbarkeit des Filters ein wenig verlängert, aber keine wirklich längere Lebensdauer des Filters ermöglicht; auf den Filzschichten vermehren sich die Mikroorganismen, die bei jeder nächsten Filtration die Qualität des gereinigten Wassers beeinflussen.

Gegenstand der Patent US 8,119,012 A ist ein Wasserfilter, der eine Mischung von mikroporösen und mesoporösen Kohlenpartikeln umfaßt, sowie Materialien, die bei der Herstellung solcher Filter eingesetzt werden. Die Erfindung löst die Aufgabe der Wasserreinigung mit verschiedenen, sich in einer Polymerumhüllung befindlichen Aktivkohlegranulationen, und alles zusammen wird zusätzlich mit einer dünnen Silberumhüllung bzw. mit einer Silber enthaltenden Hülle umgeben. Die Granulationen liegen auch in Form von Pulvern, Fasern oder Nanoröhren sowie anderer verschiedener Ausführungen von Nanoröhren (single-wall, multiwall) vor. Zusätzlich zum Granulat der Aktivkohle besteht der Filter auch aus aktivem Magnesium, aktivem Aluminium, aktiven Silikaten, metallorganischen Materialien verschiedener Rahmen, Glass- bzw. Glasfaserpartikeln, synthetischen Polymer-, natürlichen Polymer-Nanofasern, Polyethylene-, Polypropylen-, Ethylenanhydridkopolymerfasern, Sand, Ton und einer Mischung aus den genannten Ingredienzen und Mischungen. Die genannte Lösung ermöglicht die Aufbereitung von Hochqualitätswasser, da das Wasser chemisch sowie biologisch und antiviral gereinigt ist, doch bietet es mangels des UV-Sterilisierungsprozesses keine längere Lebensdauer des Filters, bietet aber eine Lösung zur längeren Filteranwendbarkeit mit geeigneten Mischungen aus chemischen Elementen und chemischen Reaktionen, die dabei freigesetzt werden, und die so eine längere Lebensdauer des Filters gewährleisten.

Eine andere bekannte Lösung zur biologischen Wasserfiltration mit einem Zwei-Stufen-Multi-Medien-Biofilter ist aus der US 20110266202 A1 bekannt. Die Lösung ermöglicht eine biologische Multi-Medien-Filtration auch mit der Anwendung von REDOX-Mitteln und basiert grundsätzlich auf einer zweistufigen Kombination: zuerst aus Vakuumreinigung und dann aus der Reinigung in einer Kammer mit aeroben Bedingungen sowie aus der Ausnutzung des Potentials, das beim Übergang zwischen einem vakuumgeschlossenen Raum und der Verbreitung in den Raum mit aeroben Bedingungen entsteht. Dadurch entstehen die Bedingungen für eine hochwertige Wasserreinigung mit der Ausnutzung von minimalen Wasserverlusten und einer maximalen reversiblen Fähigkeit der Kontaminanten. Auch die genannte Lösung basiert auf Kohlenstoffquellen, die auch sonst eine hohe Reinigungskapazität bei der Wasserreinigung aufweist. Ähnlich wie die frühere Lösung, geht diese nicht die Funktion einer längeren Lebensdauer des Filters mit einem UV-Sterilisierungsprozess an, da sie auf dem Prinzip der Ausnutzung des Potentials im Unterschied zwischen den Vakuumbedingungen bzw. luftlosen Bedingungen und den aeroben bzw. Luftbedingungen wirkt.

Nach der WO 2010005936 A2 basiert eine Lösung für einen mehrstufigen Wasserfilter ähnlich wie bei den o. g. Lösungen auf dem Einsatz von Aktivkohle, einer Faserkombination von Filtrationsmedien und -scheiben sowie katalytischen Eigenschaften von elektropositiven Metallfasern verschiedener Dimensionen. Die Filtration wird dabei hinsichtlich des Wasserzufuhrsystems durchgeführt (stromabwärts oder stromaufwärts). Gemäß der WO 1997006879 wird die

Aufgabe der Erfindung ist es eine Vorrichtung anzugeben, bei dem die Filtermodulstandzeit und das Filterergebnis mit einfachen Mitteln verbessert werden kann.

Die Erfindung löst diese Aufgabe dadurch, dass der ersten Kammer wenigstens eine UV-Lichtquelle zugeordnet ist und in der ersten Kammer zur Erhöhung der Leistung des UV-Sterilisators zwei parallele Reflexionsplatten vorgesehen sind, von denen wenigstens eine unter Ausbildung eines Durchlasses für das Wasser durch die Platte perforiert ist, dass der zweiten Kammer wiederum wenigstens eine UV-Lichtquelle zugeordnet ist und in der zweiten Kammer zur Erhöhung der Leistung des UV-Sterilisators ebenfalls zwei parallele Reflexionsplatten vorgesehen sind, von denen wenigstens eine unter Ausbildung eines Durchlasses für das Wasser durch die Platte perforiert ist, durch welche perforierte Reflexionsplatte Wasser aus dem Filterpaket in die zweite Kammer einbringbar ist, wobei das Filterpaket mehrere Filtrationsmedien umfasst, zwischen denen Zwischenfilter aus elektropositiv geladenen Nanofasern, angeordnet sind und wobei von den Filtrationsmedien das erste und das letzte auf Oxidation-Reduktion basieren, und dass die anderen Filtrationsmedien Adsorptionsfiltrationsmedien sind.

Das Filterpaket umfasst dabei mehrere Filtrationsmedien, zwischen denen Zwischenfilter aus elektropositiv geladenen Nanofasern angeordnet sind.

Von den Filtrationsmedien basieren das erste und das letzte auf Oxidation-Reduktion, und die anderen Filtrationsmedien sind Adsorptionsfiltrationsmedien. Erfindungsgemäß wird das Problem der Multi-Medien-Filtration von kontaminiertem Wasser zu reinem Wasser derart gelöst, dass mit der Anwendung der UV-Sterilisierungsmethode und REDOX-Mitteln sowohl reines Wasser als auch eine längere Lebensdauer der Filteranordnungen und der Filterscheiben im Inneren der Filteranordnungen erzielt werden. Durch die Kombination der gleichzeitigen Anwendung von verschiedenen Methoden und Mitteln (Filtrationsmitteln) sowie deren Reihenfolge, wird diese technische Lösung Smartfilter genannt.

Der Gegenstand der Erfindung ist ein Smart-Multistufen-Multi-Medien-Wasserfilter oder einfacher gesagt Smartfilter, der zuerst mit UV-Sterilisierung und danach mit mehreren Filtrationsmedien (REDOX-Mitteln - chemische, biologische und antivirale Reinigung) in einem Gehäuse wirkt; mit der Anordnung in einer bestimmten Reihenfolge ermöglicht dieser Filter eine hohe Qualität des filtrierten Wassers und im Vergleich zu herkömmlichen Sandfiltern in einer kürzeren Kontaktzeit und in größeren Durchflüssen, wobei sich durch die UV-Sterilisierung in der Filteranordnung keine Mikroorganismen entwickeln können und durch die REDOX-Mittel der Wachstum von Mikroorganismen kontrolliert wird.

Das durch die Erfindung gelöste technische Problem ist eine derartige Konstruktion des Smart-Wasserfilters, die mithilfe von verschiedenen Filteranordnungen die Aufbereitung von hochwertigem Wasser ermöglicht und mithilfe der bereits bekannten UV-Sterilisierung und mit REDOX-Mitteln die Entwicklung von Mikroorganismen verhindert und damit eine längere Lebensdauer der verwendeten Filtrationsmedien und somit eine bessere Reinigung des Wasserfilters gewährleistet.

### Kurze Beschreibung der Zeichnung

Die Erfindung wird im Folgenden anhand der Zeichnung an einem Ausführungsbeispiel näher erläutert. Es zeigen:
Fig. 1 eine Kammer zur UV-Sterilisierung des Wassers im Querschnitt,

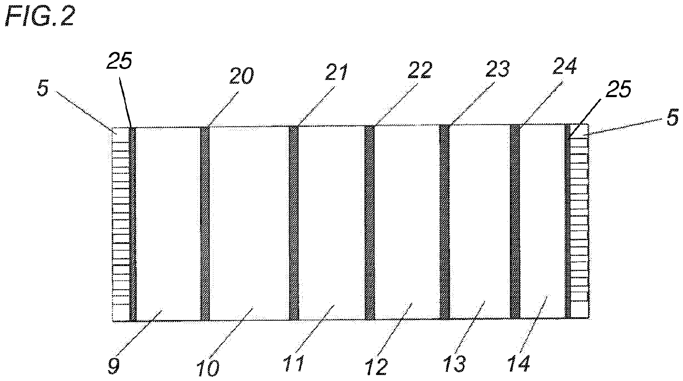

Fig. 2 ein Filterpaket mit perforierten Reflexionsplatten im Querschnitt und
Fig. 3 eine erfindungsgemäße Vorrichtung im Querschnitt.

### Weg zur Ausführung der Erfindung

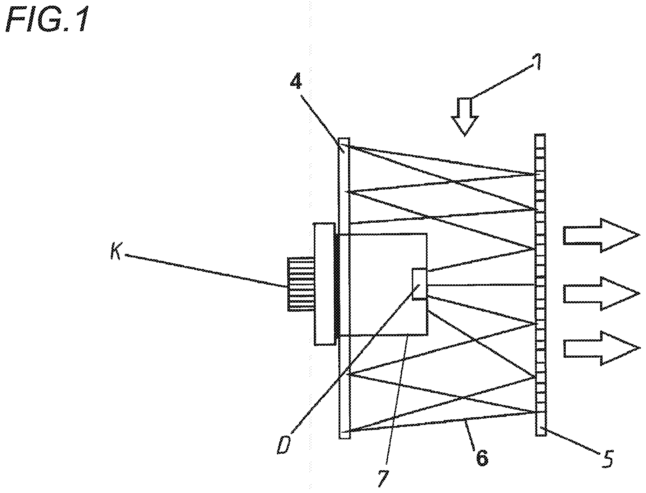

Fig. 1 zeigt eine Kammer zur UV-Sterilisierung des Wassers mit UV-Licht dar. Das Wasser tritt durch eine Eintrittsöffnung 1 ein, wo es unmittelbar mit UV-Strahlen 6 in Kontakt kommt. Die von einer LED UV-Diode D abgestrahlte und von einer Reflexionsplatte 4 reflektierte Strahlung wird einer zweiten parallel zur ersten Reflexionsplatte 4 angeordneten zweiten Reflexionsplatte 5 zugeleitet und von dieser wiederum reflektiert. Zur Kühlung sind Kühlrippen K vorgesehen, die eine ungestörte Wirkung der LED UV-Diode ermöglicht. Die Desinfektion mit UV-Licht ist eine Wasserdesinfektionsmethode ohne Anwendung von chemischen Oxidationsmitteln. Im Wasser bilden sich also keine gefährlichen oxidierten Nebenprodukte der Desinfektion. Ultraviolett- oder UV-Licht sind elektromagnetische Wellen mit einer Wellenlänge zwischen 200 und 400 Nanometer. Die Desinfektion mit UV-Licht erfolgt beim Übergang des Wassers durch den Reaktor, wo die Mikroorganismen der Energie der Photonen des UV-C-Lichts, das eine Wellenlänge von 200 bis 280 Nanometer beträgt, ausgesetzt werden. Dabei wird der genetische Code (DNA) der Mikroorganismenzellen beschädigt und die Mikroorganismen können sich nicht mehr erfolgreich vermehren und Krankheiten verursachen. Die Reflexionsplatte 5 ist zwecks Ausbildung eines Durchlasses für das Wasser durch die Platte perforiert.

AM 2000: Oxidation/Reduktion (REDOX) ist eine der bekanntesten, in der Natur auftretenden Reaktionen. Die REDOX-Mittel entfernen Gase wie Chlor, Wasserstoffsulfid (Schwefelwasserstoff) und Methan aus Wasser. Sie entfernen auch alle löslichen Schwermetalle, helfen die Ablagerung von Mineralhartbelägen zu verhindern und die Anwesenheit von Mikroorganismen zu reduzieren. Die Eigenschaft, wegen der diese Mittel einzigartig sind, besteht darin, dass die gesamte, zur Entfernung von Kontaminanten aus dem Wasser benötigte Energie natürlich bzw. inherent im elektrochemischen und katalytischen Potential einer REDOX-Mischung anwesend ist. Mit seiner Universalanwendung eignet sich AM 2000 hervorragend für eine breite Palette von Wasserbehandlungsanwendungen, vor allem aber zur Entfernung von Chlor, gelösten Schwermetallen, zur Kontrolle von Mikroorganismen, zur Verhinderung von Ablagerungen aus Hartbelägen und zur Entfernung von Eisen. Bei der Entfernung von Chlor entfernen die REDOX-Mittel mit reinem Kupfer-Zink (hoher Reinheitsgrad) stetig 99 % des freien Chlors aus dem Trinkwasser, indem sie das gelöste Chlorgas elektrochemisch zu wasserlöslichen Chloridionen reduzieren. Bei der Entfernung von gelösten Schwermetallen entfernen die REDOX-Mittel beim direkten Kontakt bis zu 98% der wasserlöslichen Kationen von Blei, Quecksilber, Kupfer, Nickel, Chrom, Arsen, Antimon, Kobalt und eine große Anzahl anderer gelösten Schwermetalle. Der Entfernungsmechanismus ist elektrochemisch und teilweise auch katalytisch. Lösliche Bleikatione reduzieren sich zu unlöslichen Bleiatomen und galvanisieren die Oberfläche und den Zwischenraum von granularen Medien. Die metallischen Kontaminanten binden sich an die REDOX-Mischung, bis sich die Filtermaterialien schließlich in einem Kupferschmelzer recyclen. Das Wachstum von Mikroorganismen wird mit einer Änderung des Oxidation/Reduktion-Potentials (ORP) OD + 200 mV für unbehandeltes Wasser, bis -500 mV für das mit dem REDOX-Mittel filtrierte Wasser kontrolliert. Allgemein können verschiedene Bakterientypen nur im Rahmen eines spezifischen Gebiets des REDOX-Potentials wachsen. Das mit AM 2000 behandelte Wasser reduziert die Bakterien und andere Mikroorganismen, indem es die Übertragung von Elektronen zerbricht bzw. unterbricht, was eine ganze Kaskade von Zellschäden verursacht. Die REDOX-Mittel töten die Bakterien durch den unmittelbaren elektrochemischen Kontakt und durch die schnelle Bildung von Hydroxyradikalen und Wasserstoffperoxid, was die Funktionsfähigkeit der Mikroorganismen verletzt. Bei der Verhinderung der Ablagerung von Hartbelägen an den Wänden einer Filterscheibe verhindern die REDOX-Mittel die Bildung und Ablagerung von Mineralbelägen/Ablagerungen, vor allem von Kalziumkarbonat. Die Elektronenmikroskopie und Röntgenkristallografie beweisen, dass sich die Hartbeläge aus unbehandeltem Wasser in relativ großen nadelförmigen Kristallen aus Kalzium- und Magnesiummineralsalzen mit unregelmäßigen Formen bilden. Die Salze bilden ein hartes, unlösliches und verflochtenes Netz von glasartigen Kalkablagerungen, die die Gas- bzw. Wasserleitungen verstopfen sowie die Übertragung von Wärme verhindern und die Ausrüstung beschädigen. Das durch die REDOX-Mittel filtrierte Wasser ändert die Morphologie von unlöslichen Kristallen des Kalzium- und Magnesiumkarbonats und -sulfats zu relativ kleinen, regelmäßig geformten gerundeten Körnern und Stäbchen. Letztere bilden eine unstabile Pulververbindung, die nicht an Metalloberflächen haftet und wird durch 5-Mikron-Filtration entfernt. Bei der Entfernung von Eisen verbinden die REDOX-Mittel gelöstes Sauerstoff und lösliches Eisen (Fe2)+. Beim Kontakt fällt (Fe2)+ katalytisch in Form von unlöslichem Eisenhydroxid und Eisenoxid aus. Dies trägt zur Reduzierung von Eisenbakterien und von Nebenprodukten des Wasserstoffsulfids sowie zur Verkleinerung von Eisenbakterienkolonien. Die primäre gute Eigenschaft von REDOX-Mitteln für die Filtration ist deren Synergiekompatibilität mit dem Aktivkohlegranulat.

AM 2100: Das ist Aktivkohle in granulierter Form und in einer breiten Palette von Anwendungen nutzbar, wie z. B. zur Trinkwasserreinigung und Reinigung von industriellen Prozessflüssigkeiten. Die Struktur des AM 2100 ist sehr geeignet für die Entfernung von natürlichen organischen Substanzen, Pestiziden, Detergenten, chlorierten Lösungen und Verbindungen, die Geschmacks- und Geruchsveränderungen verursachen. AM 2100 wird durch die Aktivierung der Kohle mit Dampf erzeugt. AM 2100 genügt allen anspruchsvollen Standards EN 12915.

AM 2200: Das ist ein Aktivkohlegranulat, das zur Aufbereitung von Trinkwasser entwickelt wurde. AM 2200 bietet eine superiore Adsorption von natürllichen organischen Kontaminanten, Farben, Pestiziden, Detergenten, chlorierten Lösungen und Verbindungen, die Geschmacks- und Geruchsveränderungen verursachen. AM 2200 genügt allen anspruchsvollen Standards EN 12915.

AM 2300: Ideal einsetzbar zur Reinigung von organischen und anorganischen Chemikalien sowie pharmazeutischen Zwischenprodukten. AM 2300 ist extrudierte Aktivkohle, die durch Dampf aktiviert und mit Säure gespült wird. Sie bietet hervorragende Adsorptionseigenschaften und einen ultra hohen Reinigungsgrad. Wegen ihrer einzigartigen Granulatform ermöglicht sie einen außerordentlich niedrigen hydrodynamischen Druckabfall. AM 2300 genügt den anspruchsvollen Standards EN 12915.

AM 2400: Ist ein Filtrationsmedium, das zur Entfernung von im Wasser gelösten Blei, Quecksilber, Nickel, Chrom und anderen Schwermetallen geeignet ist.

Nanofasern: Ein Nanofilter besteht aus wärmegebundenen Mikroglasfasern und Celulose, die mit Nanoaluminafasern in einer ungewebten Matrize verworben sind, was eine hohe Ladung des Filtrationsmediums bewirkt. Das Ganze ist in eine gefaltete Einlage eingesetzt, was eine einzigartige Kombination von Wirksamkeit, Leistung, Geschwindigkeit und niedrigem Druckabfall des Durchflusses gewährleistet. Alle Nanofilterkomponenten sind gemäß FDA-Zertifikat eingesetzt.

Der Nanofilter ist so konzipiert und ausgebildet, dass er den anspruchsvollsten Bedürfnissen zur Wasserbehandlung genügt. Mit der Anwendung des wissenschaftlichen Prinzips des elektropositiven Anziehungskraft/Erfassung führt er zu einer schnellen und sehr wirksamen Adsorption fast aller Partikelgrößen. Das Nanomedium hat eine hohe Leistung für Partikeln mit einer Größe von 10 Mikron bis zu Partikeln mit einer Größe von mehreren Nanometern.

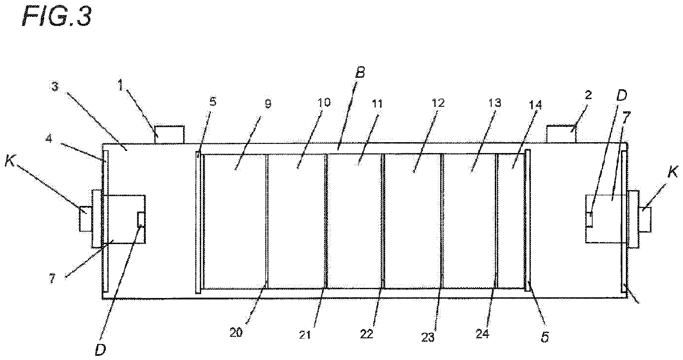

In der Fig. 3 wird die Smart-Mehr-Stufen-Multi-Medien-Filtration von kontaminiertem Wasser zu reinem Trinkwasser dargestellt. Kontaminiertes Wasser strömt in die Vorrichtung durch die Eintrittsöffnung 1. Das Eintritts-LED-UV D desinfiziert das Wasser mit seinen UV-Strahlen. Die UV-Strahlen werden von der Reflexionsplatte 4 und von der perforierten Reflexionsplatte 5 mehrfach reflektiert und geben Energie an das Wasser ab. Damit wird die Leistung des UV-Sterilisators erhöht und die Mikroorganismen, die sich in den folgenden Filterschichten bilden könnten, werden zerstört. Dabei kommt es im Filter zu einer erhöhten Temperatur, deswegen werden Kühlrippen K eingesetzt, die das System kühlen. Wegen des richtigen Abstands des LED-UVs, ist die LED-UV-Diode an einem transparenten PVC-Träger 7 zwischen den Reflexionsplatten 4, 5 angeordnet. Das Wasser fließt durch die perforierte Reflexionsplatte 5 in das Filterpaket und dort durch die einzelnen Filtrationsmedien, in Filter, die auf Oxidation-Reduktion bzw. Adsoprtion basieren, und gleichzeitig fließt das Wasser auch durch die Zwischenfilter, Nanofasern, die elektropositiv geladen sind. Das Wasser fließt also durch die Filtrationsscheiben (AM 2000) 9, (AM 2100) 10, (AM 2200) 11, (AM 2300) 12, (AM 2400) 13 und (OX 100) 14, von denen die erste 9 und die letzte 14 in der Reihe auf Oxidation-Reduktion basieren, und die anderen Zwischenfiltrationmedien sind Adsorptionsfiltrationsmedien. Die Medien sind in einer solchen Reihenfolge angeordnet, dass alle eine sehr breite Palette von Kontaminanten entfernen und jeder nachfolgende ist zur Entfernung von spezieller Kontaminanten gewidmet. Das Wasser fließt in weiterer Folge durch eine perforierte Reflexionsplatte 5 in die zweite Kammer, die mit der ersten Kammer praktisch Baugleich, nur gespiegelt ist.

Die Zwischenschichten, die Nanofasern FL 100 20, FL 200 21, FL 300 22, FL 400 23 und FL 500 24 stellen halbdurchlässige dünne Schichten dar, die mit ihren Ladung eine zusätzliche Reinigung gewährleisten und gleichzeitig auch ein Gehäuse zwischen den einzelnen Filtrationsscheiben darstellen. Das am transparenten PVC-träger 7 in der zweiten Kammer angeordnete Ausgangs-LED-UV D sterilisiert das Wasser erneut, die UV-Strahlen reflektieren von der Reflexionsplatte 4 bis zum perforierten Lichtreflektor 5 und desinfizieren das Wasser. Das gereinigte Wasser fließt durch die Auslassöffnung 2 aus der Vorrichtung.

## Patentansprüche

1. Vorrichtung zum Filtrieren von Wasser mit einem Filterpaket aus verschiedenen Filteranordnungen und mit UV-Strahlern zur UV-Sterilisierung des Wassers, für die Aufbereitung von hochwertigem Wasser, wobei das kontaminierte Wasser durch eine Eintrittsöffnung (1) in eine erste Kammer einbringbar ist, wobei in Strömungsrichtung des Wassers gesehen hinter einer perforierten Platte der ersten Kammer das Filterpaket aus verschiedenen Filteranordnungen in einem Gehäuse (3) vorgesehen ist und wobei in Strömungsrichtung des Wassers gesehen hinter dem Filterpaket gesehen eine zweite Kammer vorgesehen ist, der eine Auslassöffnung (2) für gereinigtes Wasser zugeordnet ist und wobei wenigstens eine UV- Lichtquelle vorgesehen ist, **dadurch gekennzeichnet, dass** der ersten Kammer wenigstens eine UV-Lichtquelle zugeordnet ist und in der ersten Kammer zur Erhöhung der Leistung des UV-Sterilisators zwei parallele Reflexionsplatten (4, 5) vorgesehen sind, von denen wenigstens eine unter Ausbildung eines Durchlasses für das Wasser durch die Platte perforiert ist, dass der zweiten Kammer wiederum wenigstens eine UV-Lichtquelle zugeordnet ist und in der zweiten Kammer zur Erhöhung der Leistung des UV-Sterilisators ebenfalls zwei parallele Reflexionsplatten (4, 5) vorgesehen sind, von denen wenigstens eine unter Ausbildung eines Durchlasses für das Wasser durch die Platte perforiert ist, durch welche perforierte Reflexionsplatte (5) Wasser aus dem Filterpaket in die zweite Kammer einbringbar ist, wobei das Filterpaket mehrere Filtrationsmedien (9), (10), (11), (12), (13), (14) umfasst, zwischen denen Zwischenfilter aus elektropositiv geladenen Nanofasern (20), (21), (22), (23), (24), angeordnet sind und wobei von den Filtrationsmedien das erste (9) und das letzte (14) auf Oxidation-Reduktion basieren, und dass die anderen Filtrationsmedien Adsorptionsfiltrationsmedien sind.

## Claims

1. Device for filtering water having a filter assembly made from different filter arrangements and with UV-emitters for UV-sterilisation of the water, for the provision of high-quality water, wherein the contaminated water can be introduced into a first chamber through an inlet opening (1), wherein, downstream of a perforated plate of the first chamber, as seen in the flow direction of the water, the filter assembly made from different filter arrangements is provided in a housing (3), and wherein, downstream of the filter assembly, as seen in the flow direction of the water, a second chamber is provided, to which an outlet opening (2) for purified water is allocated, and wherein at least one UV-light source is provided, **characterised in that** the first chamber is allocated at least one UV-light source and, in order to increase the performance of the UV-steriliser, two parallel reflection plates (4, 5) are provided in the first chamber, at least one of which reflection plates is perforated, thus forming a through-passage for the water through the plate, that the second chamber is in turn allocated at least one UV-light source and, in order to increase the performance of the UV-steriliser, two parallel reflection plates (4, 5) are likewise provided in the second chamber, at least one of which reflection plates is perforated, thus forming a through-passage for the water through the plate, through which perforated reflection plate (5) water can be introduced into the second chamber from the filter assembly, wherein the filter assembly comprises a plurality of filtration media (9), (10), (11), (12), (13), (14), between which are disposed intermediate filters made from electro-positively charged nano-fibres (20), (21), (22), (23), (24), and wherein, from among the filtration media, the first (9) and the last (14) are based on oxidation-reduction, and that the other filtration media are adsorption filtration media.

## Revendications

1. Dispositif pour le filtrage de l'eau avec un bloc filtrant constitué de divers dispositifs de filtrage et avec des projecteurs UV pour la stérilisation par UV de l'eau, pour la préparation d'eau de haute qualité, dans lequel l'eau contaminée peut être introduite par une ouverture d'admission (1) dans une première chambre, dans lequel est prévu derrière une plaque perforée de la première chambre - vu dans le sens d'écoulement de l'eau - le bloc filtrant constitué de divers dispositifs de filtrage dans un boîtier (3) et dans lequel est prévue derrière le bloc filtrant - vu dans le sens de l'écoulement de l'eau - une deuxième chambre à laquelle est associée une ouverture d'évacuation (2) pour l'eau épurée et dans lequel est prévue au moins une source de lumière UV, **caractérisé en ce qu'**à la première chambre est associée au moins une source de lumière UV et dans la première chambre, pour augmenter la puissance du stérilisateur à UV, sont prévues deux plaques réfléchissantes (4, 5) parallèles dont au moins une est perforée et constitue un passage pour l'eau à travers la plaque, qu'à la deuxième chambre est également associée au moins une source de lumière UV et dans la deuxième chambre, pour augmenter la puissance du stérilisateur à UV, sont également prévues deux plaques réfléchissantes (4, 5) parallèles dont au moins une est perforée et constitue un passage pour l'eau à travers la plaque, l'eau provenant du bloc filtrant pouvant être introduite par cette plaque réfléchissante perforée (5) dans la deuxième chambre, le bloc filtrant comprenant plusieurs éléments filtrants (9), (10), (11), (12), (13), (14) entre lesquels des filtres intermédiaires constitués de nanofibres à charge électropositive (20), (21), (22), (23), (24) sont disposés et le premier (9) et le dernier (14) des éléments filtrants étant basés sur l'oxydoréduction, et que les autres éléments filtrants sont des éléments de filtration par adsorption.
